# EUROPÄISCHE PATENTANMELDUNG

(11) **EP 3 059 023 A1**
(43) Veröffentlichungstag der Anmeldung: **24.08.2016**
(21) Anmeldenummer: 16156155.0
(22) Anmeldetag: 17.02.2016
(51) Int. Cl.: B08B 9/42, B29C 67/00

(54) **VERFAHREN ZUM HERSTELLEN EINER VORRICHTUNG ZUM TRAGEN VON ZU REINIGENDEN BEHÄLTERN, SOWIE VORRICHTUNG ZUM TRAGEN VON ZU REINIGENDEN BEHÄLTERN**

(30) Priorität: 17.02.2015 DE 102015102221
(71) Anmelder: KRONES AG, 93073 Neutraubling (DE)
(72) Erfinder: Wittmann, Norbert, 93073 Neutraubling (DE)
(74) Vertreter: Nordmeyer, Philipp Werner

(57) **Zusammenfassung**

Die Erfindung bezieht sich auf ein Verfahren zum Herstellen einer Vorrichtung zum Tragen von zu reinigenden Behältern in einer Reinigungsmaschine, bevorzugt in einer Reinigungsmaschine einer Getränkeabfüllanlage, umfassend mindestens eine Komponente zum Ausbilden der Vorrichtung, wobei die mindestens eine Komponente durch schichtweises Materialauftragen erzeugt wird. Ferner bezieht sich die Erfindung auf eine Vorrichtung zum Tragen von zu reinigenden Behältern in einer Reinigungsmaschine, bevorzugt in einer Reinigungsmaschine einer Getränkeabfüllanlage, mit mindestens einer Komponente zum Ausbilden der Vorrichtung, wobei die mindestens eine Komponente durch schichtweises Materialauftragen erzeugt ist.

## Beschreibung

### Technisches Gebiet

Die vorliegende Erfindung betrifft eine Verfahren zum Herstellen einer Vorrichtung zum Tragen von zu reinigenden Behältern in einer Reinigungsmaschine, bevorzugt in einer Reinigungsmaschine einer Getränkeabfüllanlage, sowie eine Komponente für eine solche Vorrichtung zum Tragen von zu reinigenden Behältern.

### Stand der Technik

Vorrichtungen zum Tragen von zu reinigenden Behältern in Reinigungsmaschinen sind wohlbekannt. Hierbei gewährleisten die durch einen Behälterzellenträger gehaltenen Behälterzellen während des Reinigungsprozesses einen schonenden Transport der zu reinigenden Behälter durch die Reinigungsmaschine. Die zu reinigenden Behälter werden dabei mittels einer Einführvorrichtung in die Behälterzellen eingeführt und anschließend durch die Bewegung der Vorrichtung zum Tragen von Behälterzellen durch die Reinigungsmaschine geführt. Dabei durchläuft die Vorrichtung während der Reinigung verschiedene Behandlungszonen der Reinigungsmaschine, in welchen unterschiedliche Reinigungsmedien bei unterschiedlichen Temperaturen vorliegen und die Reinigung der zu reinigenden Behälter ermöglichen.

Entsprechend der spezifischen Wärmekapazität des oder der Werkstoffe und der Masse des Behälterzellenträgers und der Behälterzellen, sowie der in einer Behandlungszone vorliegenden Temperatur und der Aufenthaltsdauer der Vorrichtung in der Behandlungszone nimmt die Vorrichtung, dabei insbesondere der Behälterzellenträger, eine gewisse Menge an Wärmeenergie auf. Bei einem Wechsel der Vorrichtung in eine weitere Behandlungszone mit geringerer Temperatur verschleppt die Vorrichtung, insbesondere der Behälterzellenträger, diese Wärmemenge in diese weitere Behandlungszone. Dies kann teilweise gewollt sein, beispielsweise wenn ein Erwärmen der weiteren Behandlungszone durch die Abwärme der Vorrichtung vorgesehen ist. Jedoch kann die Abgabe der aufgenommenen Wärmeenergie auch dazu führen, dass die weitere Behandlungszone beziehungsweise deren Komponenten zu stark erwärmt werden und folglich prozesstechnisch gegenzusteuern ist, beispielsweise durch Vorsehen einer zusätzlichen Kühlung oder eine Abkühlzone zwischen den beiden Behandlungszonen. Dies wiederum führt zu einem erhöhten Energiebedarf beim Betrieb der Reinigungsmaschine, da unter anderem durch die Kühlung zusätzlich Energie aufzuwenden ist und aufgrund der stetigen Wärmeabfuhr durch die Vorrichtungen aus der Behandlungszone mit hoher Temperatur ein hoher Heizenergiebedarf zum Kompensation der Wärmeabfuhr entsteht.

Die Behälterzellenträger sind zumeist aus einem Metall, üblicherweise Stahl oder Edelstahl, gegebenenfalls auch aus einem Kunststoff hergestellt und sind zur Aufnahme der aus einem Kunststoff oder Stahl hergestellten Behälterzellen vorgesehen. Aufgrund des daraus resultierenden hohen Eigengewichts der Vorrichtung, insbesondere des Behälterzellenträgers, wird somit eine hohe Menge an Wärmeenergie in den Behandlungszonen der Reinigungsmaschine verschleppt. Ferner sind die in der Reinigungsmaschine verbauten Antriebe zur Bewegung der Vorrichtungen aufgrund deren hohen Eigengewichts entsprechend groß auszulegen und folglich energieintensiv zu betreiben.

Um trotz der benötigten Stabilität und Steifigkeit der Vorrichtung eine Gewichtsreduzierung zu erzielen, ist eine aufwendige und teilweise filigrane Blechbearbeitung und/oder eine schwierige und aufwendige Verformung des oder der Kunststoffe notwendig, um zum einen leicht- oder unbelastete Bereiche der Vorrichtung, insbesondere des Behälterzellenträgers, auszusparen, sowie die für die Funktion der Vorrichtung notwendigen Verformungen des Behälterzellenträgers und der Behälterzellen durchzuführen und um Funktionselemente einzubringen.

### Darstellung der Erfindung

Ausgehend von dem bekannten Stand der Technik ist es eine Aufgabe der Erfindung, eine verbesserte Vorrichtung zum Tragen von zu reinigenden Behältern in einer Reinigungsmaschine, bevorzugt in einer Reinigungsmaschine einer Getränkeabfüllanlage, bereitzustellen.

Diese Aufgabe wird mit einem Verfahren zum Herstellen einer Vorrichtung zum Tragen von zu reinigenden Behältern in einer Reinigungsmaschine, bevorzugt in einer Reinigungsmaschine einer Getränkeabfüllanlage, mit den Merkmalen des Anspruch 1 gelöst. Vorteilhafte Weiterführungen ergeben sich aus den Unteransprüchen.

Entsprechend wird ein Verfahren zum Herstellen einer Vorrichtung zum Tragen von zu reinigenden Behältern in einer Reinigungsmaschine, bevorzugt in einer Reinigungsmaschine einer Getränkeabfüllanlage, umfassend mindestens eine Komponente zum Ausbilden der Vorrichtung, angegeben. Erfindungsgemäß wird die mindestens eine Komponente durch schichtweises Materialauftragen erzeugt.

Dadurch, dass die mindestens eine Komponente durch schichtweises Materialauftragen erzeugt wird, kann die Konstruktion der Vorrichtung hinsichtlich deren Anforderungen optimiert bereitgestellt werden. So kann eine Vorrichtung mit hoher Stabilität und komplexer Geometrie bereitgestellt werden, welche gleichzeitig ein im Vergleich zu herkömmlich erzeugten Vorrichtungen reduziertes Gewicht aufweist, wodurch unter anderem der benötigte Energieeinsatz und die Verschleppung von Wärme und/oder Schmutz reduziert werden können.

Hierbei können sowohl Kunststoffe, als auch Metalle beziehungsweise Metalllegierungen, bevorzugt Stahl oder Edelstahl, oder alternative funktionale Werkstoffe, welche beispielsweise die Schmutzverschleppung, die Korrosionsgefahr und/oder die durch die Vorrichtung im Betrieb der Reinigungsmaschine auftretenden Lärmkulisse reduzieren, verarbeitet werden.

Ferner kann dadurch der Fertigungsaufwand zum Erzeugen der Vorrichtung reduziert werden, da durch das schichtweise Materialauftragen keine kostenintensiv herzustellenden Werkzeugformen benötigt werden, wie sie beispielsweise bei der Spritzguss-Fertigung oder beim Gießen metallischer Werkstoffe erforderlich sind.

Auch können durch das schichtweise Materialauftragen komplexe Geometrien mit Hinterschneidungen in einem Fertigungsschritt erzeugt werden. Hierdurch kann auf Öffnungen und/oder Schlitze, wie Bohrungen für Schraubverbindungen oder Schnappverbindungen sowie Bereichen mit erhöhter Schmutzablagerungsgefahr, wie Angusspunkte, Auswerferabdrücke oder Schweißnähte, welche bei herkömmlichen Vorrichtungen zum Tragen von Behältern für die Fertigung beziehungsweise für den Zusammenbau der Vorrichtung notwendig sind und welche während des Betriebs der Reinigungsmaschine in regelmäßigen Abständen zu reinigen sind, verzichtet werden.

In einer bevorzugten Weiterführung erfolgt das schichtweise Materialauftragen mittels eines 3D-Druckers.

Dadurch, dass das schichtweise Materialauftragen mittels eines 3D-Druckers erfolgt, kann ein im Bereich des 3D-Drucks standardisiertes Verfahren, bevorzugt selektives Laserschmelzen oder Elektronenstrahlschmelzen für die Verarbeitung von Metallen, und/oder selektives Lasersintern für die Verarbeitung von Polymeren, Keramik oder Metallen, sowie Stereolithografie oder Digital Light Processing für die Verarbeitung von flüssigen Kunstharzen und Polyjet-Modeling sowie Fused Deposition Modeling für die Verarbeitung von Kunststoffen und/oder Kunstharzen, verwendet werden. So können Konturen und/oder Bauteilgeometrien, welche mit anderen Fertigungsverfahren nicht oder nur unter hohem Aufwand herstellbar sind, einfach und kostengünstig erzeugt werden.

In einer bevorzugten alternativen Ausführung wird als mindestens eine Komponente ein Behälterzellenträger und/oder mindestens eine Behälterzelle erzeugt.

Dadurch, dass als mindestens eine Komponente ein Behälterzellenträger und/oder mindestens eine Behälterzelle erzeugt wird, kann eine besonders vorteilhafte Vorrichtung zum Tragen von Behältern bereitgestellt werden. Da der Behälterzellenträger den größten Anteil an der Wärme- und/oder Schmutzverschleppung innerhalb der Reinigungsmaschine hat, kann durch dessen Erzeugung mittels des schichtweisen Materialauftragens eine in seiner Form hinsichtlich Steifigkeit und Masse optimierter Behälterzellenträger mit einer geringen Wärme- und/oder Schmutzverschleppung in der Reinigungsmaschine bereitgestellt werden.

Ferner kann die mindestens eine Behälterzelle, welche mittels des schichtweisen Materialauftragens erzeugt wurde, analog zu dem Behälterzellenträger mit einer geringen Wärme- und/oder Schmutzverschleppung bereitgestellt werden. Weiterhin können durch die Erzeugung der mindestens einen Behälterzelle mittels des schichtweisen Materialauftragens eine auf eine Reinigung des in der Behälterzelle aufgenommenen, zu reinigenden Behälters optimierten, komplexen Form bereitgestellt werden, welche bei herkömmlichen Fertigungsverfahren, beispielsweise aufgrund von nicht zu überschreitenden Biegeradien oder aufgrund der Entformung aus Negativformen, nicht oder nur unter hohem Aufwand hergestellt werden können.

In einer bevorzugten alternativen Ausführung wird zum schichtweisen Materialauftragen ein einziges Material verwendet.

Dadurch, dass zum schichtweisen Materialauftragen ein einziges Material verwendet wird, kann die mindestens eine Komponente besonders schnell und kostengünstig hergestellt werden. Ferner entsteht lediglich ein minimaler Materialaufwand, da einzig das zum Erzeugen der mindestens einen Komponente erforderliche Material verbraucht wird, das restliche Material sortenrein verbleibt und ohne eine Nachbehandlung, wie einem Sortieren oder Reinigen, wiederverwendet werden kann.

In einer bevorzugten alternativen Ausgestaltung werden zum schichtweisen Materialauftragen mehrere Materialien, bevorzugt zwei Materialien, verwendet, wobei das schichtweise Materialauftragen bevorzugt an mindestens einem Halbzeug erfolgt.

Dadurch, dass zum schichtweisen Materialauftragen mehrere Materialien, bevorzugt zwei Materialien, verwendet werden, kann die mindestens eine Komponente bezüglich der Lasten, welche während des Betriebs der die Vorrichtung aufweisenden Maschine beziehungsweise Anlage auftreten, optimiert aufgebaut werden. So kann in Bereichen hoher Last ein Material mit hoher Zugfestigkeit vorgesehen sein, und in Bereichen geringerer Last beispielsweise ein besonders leichtes Material angeordnet sein. Ferner können dadurch, dass zum schichtweisen Materialauftragen mehrere Materialien verwendet werden, Funktionselemente beziehungsweise Funktionsgruppen, wie Klemmungen, bevorzugt PET-Klemmungen, und/oder Gummierungen, sowie Oberflächenbeschichtungen, wie haftende Schichten, direkt in einem Fertigungsschritt erzeugt werden.

Wenn das schichtweise Materialauftragen an mindestens einem Halbzeug erfolgt, kann eine besonders günstig gefertigte Vorrichtung mit Eigenschaften, welche besonders gut an die im Betrieb auftretenden Anforderungen angepasst sind, bereitgestellt werden. So kann das schichtweise Materialauftragen an, beziehungsweise um eine einfache Blech-Grundkonstruktion herum erfolgen. Ferner können Inserts mit besonderen Materialeigenschaften in die mindestens eine Komponente integriert werden, wodurch eine weiterhin verbesserte Vorrichtung bereitgestellt werden kann.

In einer besonders bevorzugten Ausführungsvariante wird die Vorrichtung durch das schichtweise Materialauftragen einstückig bereitgestellt.

Dadurch, dass die Vorrichtung durch das schichtweise Materialauftragen einstückig bereitgestellt wird, kann die Fertigung im Vergleich zu herkömmlichen Fertigungstechniken, insbesondere bei einer Ausgestaltung komplexer, anwendungsoptimierter Strukturen, besonders günstig bereitgestellt werden, da unter anderem eine Einzelfertigung verschiedener Einzelkomponenten sowie deren anschließender Zusammenbau entfällt. Hierbei kann die Vorrichtung komplett mittels des schichtweisen Auftragens erzeugt werden. Ebenfalls möglich ist, dass die mittels des schichtweisen Materialauftragens erzeugte mindestens eine Komponente an eine bereits bestehende Einzelkomponente aufgetragen wird, oder mehrere Einzelkomponenten verbindet, wodurch ein einstückiges Bauteil bereitgestellt wird.

In einer bevorzugten alternativen Ausgestaltung erfolgt das schichtweise Materialauftragen auf Grundlage digitaler Modelldaten der mindestens einen Komponente.

Dadurch, dass das schichtweise Materialauftragen auf Grundlage digitaler Modelldaten der mindestens einen Komponente erfolgt, kann die mindestens eine Komponente formgenau und schnell erzeugt werden, da keine aufwendigen und teuren Formeinrichtungen im Vorfeld der Fertigung anzufertigen sind. Ferner ist hierdurch eine hohe Reproduzierbarkeit der mindestens einen Komponente und somit der Vorrichtung bereitgestellt, da die mindestens eine Komponente direkt anhand der digitalen Modelldaten erzeugt wird.

Die zu lösende Aufgabe wird auch mit einer Vorrichtung mit den Merkmalen des unabhängigen Anspruchs 8 gelöst. Vorteilhafte Ausgestaltungen ergeben sich aus den Unteransprüchen.

Entsprechend wird eine Vorrichtung zum Tragen von zu reinigenden Behältern in einer Reinigungsmaschine, bevorzugt in einer Reinigungsmaschine einer Getränkeabfüllanlage, mit mindestens einer Komponente zum Ausbilden der Vorrichtung, angegeben. Erfindungsgemäß ist die mindestens eine Komponente durch schichtweises Materialauftragen erzeugt.

Dadurch, dass die mindestens eine Komponente durch schichtweises Materialauftragen erzeugt ist, kann die Konstruktion der Vorrichtung hinsichtlich deren Anforderungen optimiert bereitgestellt werden. So kann eine Vorrichtung mit hoher Stabilität und komplexer Geometrie bereitgestellt werden, welche gleichzeitig ein im Vergleich zu herkömmlich erzeugten Vorrichtungen reduziertes Gewicht aufweist, wodurch unter anderem der benötigte Energieeinsatz und die Verschleppung von Wärme und/oder Schmutz reduziert werden kann.

Hierbei können sowohl Kunststoffe, als auch Metalle beziehungsweise Metalllegierungen, bevorzugt Stahl oder Edelstahl, oder alternative funktionale Werkstoffe, welche beispielsweise die Schmutzverschleppung, die Korrosionsgefahr und/oder die durch die Vorrichtung im Betrieb der Anlage auftretenden Lärmkulisse reduzieren, verarbeitet sein.

Ferner kann dadurch der Fertigungsaufwand zum Erzeugen der Vorrichtung reduziert sein, da durch das schichtweise Materialauftragen keine kostenintensiv herzustellenden Werkzeugformen benötigt werden, wie sie beispielsweise bei der Spritzguss-Fertigung oder beim Gießen metallischer Werkstoffe erforderlich sind.

Auch sind durch das schichtweise Materialauftragen komplexe Geometrien mit Hinterschneidungen in einem Fertigungsschritt erzeugbar. Hierdurch kann auf Öffnungen und/oder Schlitze, wie Bohrungen für Schraubverbindungen oder Schnappverbindungen sowie Bereichen mit erhöhter Schmutzablagerungsgefahr, wie Angusspunkte, Auswerferabdrücke oder Schweißnähte, welche bei herkömmlichen Vorrichtungen zum Tragen von Behältern für die Fertigung beziehungsweise für den Zusammenbau der Vorrichtung notwendig sind und welche während des Betriebs der Reinigungsmaschine in regelmäßigen Abständen zu reinigen sind, verzichtet werden.

In einer bevorzugten alternativen Ausgestaltung ist das schichtweise Materialauftragen mittels eines 3D-Druckers erzeugt.

Dadurch, dass das schichtweise Materialauftragen mittels eines 3D-Druckers erzeugt ist, kann ein im Bereich des 3D-Drucks standardisiertes Verfahren, bevorzugt selektives Laserschmelzen oder Elektronenstrahlschmelzen für die Verarbeitung von Metallen, und/oder selektives Lasersintern für die Verarbeitung von Polymeren, Keramik oder Metallen, sowie Stereolithografie oder Digital Light Processing für die Verarbeitung von flüssigen Kunstharzen und Polyjet-Modeling sowie Fused Deposition Modeling für die Verarbeitung von Kunststoffen und/oder Kunstharzen, verwendet werden. So sind Konturen und/oder Bauteilgeometrien, welche mit anderen Fertigungsverfahren nicht oder nur unter hohem Aufwand herstellbar sind, einfach und kostengünstig erzeugbar.

In einer weiter bevorzugten Ausführungsform ist die Komponente ein Behälterzellenträger und/oder mindestens eine Behälterzelle.

Dadurch, dass die mindestens eine Komponente ein Behälterzellenträger und/oder mindestens eine Behälterzelle ist, kann eine besonders vorteilhafte Vorrichtung zum Tragen von zu reinigenden Behältern bereitgestellt werden. Da der Behälterzellenträger den größten Anteil an der Wärme- und/oder Schmutzverschleppung innerhalb der Reinigungsmaschine aufweist, kann durch dessen Erzeugung mittels des schichtweisen Materialauftragens eine in seiner Form hinsichtlich Steifigkeit und Masse optimierter Behälterzellenträger mit einer geringen Wärme- und/oder Schmutzverschleppung in der Reinigungsmaschine bereitgestellt werden.

Ferner kann die mindestens eine Behälterzelle, welche mittels des schichtweisen Materialauftragens erzeugt wurde, analog zu dem Behälterzellenträger mit einer geringen Wärme- und/oder Schmutzverschleppung bereitgestellt werden. Weiterhin können durch die Erzeugung der mindestens einen Behälterzelle mittels des schichtweisen Materialauftragens eine auf eine Reinigung des in der Behälterzelle aufgenommenen, zu reinigenden Behälters optimierten, komplexen Form bereitgestellt werden, welche bei herkömmlichen Fertigungsverfahren, beispielsweise aufgrund von nicht zu überschreitenden Biegeradien oder aufgrund der Entformung aus Negativformen, nicht oder nur unter hohem Aufwand hergestellt werden können.

In einer bevorzugten alternativen Ausgestaltung weist die mindestens eine Komponente ein einziges Material auf.

Dadurch, die mindestens eine Komponente ein einziges Material aufweist, kann die mindestens eine Komponente besonders schnell und kostengünstig herstellbar bereitgestellt werden. Ferner entsteht lediglich ein minimaler Materialaufwand, da einzig das zum Erzeugen der mindestens einen Komponente erforderliche Material verbraucht wird, und das restliche Material sortenrein verbleibt und ohne eine Nachbehandlung, wie einem Sortieren oder Reinigen, wiederverwendet werden kann.

In einer weiter bevorzugten Ausbildung weist die mindestens eine Komponente mehrere Materialien, bevorzugt zwei Materialien, auf, wobei der schichtweise Materialauftrag bevorzugt an einem Halbzeug erfolgt ist.

Dadurch, dass die mindestens eine Komponente mehrere Materialien, bevorzugt zwei Materialien, aufweist, kann die mindestens eine Komponente bezüglich der Lasten, welche während des Betriebs der die Vorrichtung aufweisenden Maschine beziehungsweise Anlage auftreten, optimiert aufgebaut sein. So kann in Bereichen hoher Last ein Material mit hoher Zugfestigkeit vorgesehen sein, und in Bereichen geringerer Last beispielsweise ein besonders leichtes Material angeordnet sein. Ferner können dadurch, dass die mindestens eine Komponente mehrere Materialien aufweist, Funktionselemente beziehungsweise Funktionsgruppen, wie Klemmungen, bevorzugt PET-Klemmungen, und/oder Gummierungen, sowie Oberflächenbeschichtungen, wie haftende Schichten, direkt in einem Fertigungsschritt erzeugt sein.

Wenn das schichtweise Materialauftragen an mindestens einem Halbzeug erfolgt, kann eine besonders günstig gefertigte Vorrichtung mit Eigenschaften, welche besonders gut an die im Betrieb auftretenden Anforderungen angepasst sind, bereitgestellt werden. So kann das schichtweise Materialauftragen an beziehungsweise um eine einfache Blech-Grundkonstruktion erfolgt sein, beispielsweise als Kunststofffilm zu Lärmschutzzwecken. Ferner können Inserts mit besonderen Materialeigenschaften in die mindestens eine Komponente integriert sein, wodurch eine weiterhin verbesserte Vorrichtung bereitgestellt werden kann.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch eine Seitenansicht einer Vorrichtung zum Tragen von zu reinigenden Behältern in einer Reinigungsmaschine mit einem mittels schichtweisen Materialauftragens erzeugten Behälterzellenträger;
- Figur 2: schematisch die Vorrichtung aus Figur 1 in einer Vorderansicht; und
- Figur 3: schematisch eine perspektivische Seitenansicht einer mittels schichtweisen Materialauftragens erzeugten Vorrichtung zum Tragen von zu reinigenden Behältern in einer Reinigungsmaschine.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente mit identischen Bezugszeichen bezeichnet. Um Redundanzen zu vermeiden, wird auf die wiederholte Beschreibung dieser Elemente in der nachfolgenden Beschreibung teilweise verzichtet.

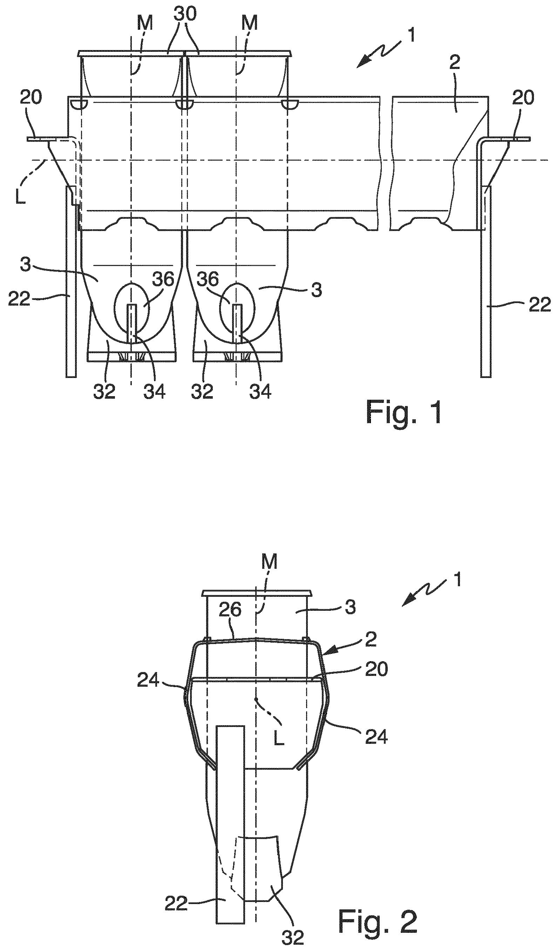

Figur 1 zeigt schematisch eine Seitenansicht einer Vorrichtung zum Tragen von zu reinigenden Behältern in einer Reinigungsmaschine mit einem mittels schichtweisen Materialauftragens erzeugten Behälterzellenträger 2. Der Behälterzellenträger 2 erstreckt sich entlang einer Längsachse L. Stirnseitig ist an dem Behälterzellenträger 2 jeweils ein Anbindungssegment 20 vorgesehen, mit welchem die Vorrichtung 1 an eine Transportkette einer Reinigungsmaschine angebracht werden kann. Ferner sind an den Stirnseiten des Behälterzellenträgers 2 Mitnehmer 22 angeordnet, welche bei Betrieb der die Vorrichtung 1 aufweisenden Reinigungsmaschine unter anderem zum Auslösen von Schaltern verwendet werden.

Entlang der Längsachse L sind an dem Behälterzellenträger 2 Behälterzellen 3 angeordnet. Die Behälterzellen 3 weisen jeweils eine Mittelachse M auf, welche senkrecht zur Längsachse L orientiert ist. Ferner weisen die Behälterzellen 3 an ihrer Oberseite eine Einführöffnung 30 auf, durch welche ein zu reinigender Behälter in die Behälterzelle 3 geführt wird. Gegenüber der Einführöffnung 30 weist die Behälterzelle 3 einen Zentrierbereich 32 auf. In diesem wird der Behälterkopf des in die Behälterzelle 3 geschobenen, zu reinigenden Behälters bezüglich der Mittelachse M zentriert, um ein optimales Reinigungsergebnis des Behälters in der Reinigungsmaschine zu erzielen. Weiterhin sind an der Behälterzelle 3 Spülöffnungen 36 vorgesehen, durch welche eine Spülflüssigkeit zu dem zu reinigenden Behälter gelangen beziehungsweise gespritzt werden kann. Im Bereich der Spülöffnungen 36 sind Positionierrippen 34 angeordnet, welche die Positionierung und Zentrierung des Behälters in der Behälterzelle 3 unterstützen. Die Behälterzellen 3 bestehen hier aus einem thermoplastischen Kunststoff. Alternativ können diese jedoch auch aus einem anderen Material, bevorzugt Stahl oder Edelstahl, gefertigt sein.

In Figur 2 ist schematisch die Vorrichtung aus Figur 1 in einer Vorderansicht gezeigt. Der sich in Richtung seiner Längsachse L erstreckende Behälterzellenträger 2 weist eine Profilform auf, welche mehrfach gekrümmt ist. Dabei sind beidseitig eines mittig angeordneten Verbindungssegments 26 Seitenwangen 24 angeordnet, durch welche eine im Wesentlichen C-förmige Profilform des Behälterzellenträgers bereitgestellt ist. An den Stirnseiten des Profils sind die mit den Mitnehmern 22 versehenen Anbindungssegmente 20 angeordnet, welche die beiden Seitenwangen 24 miteinander verbinden und den Behälterzellenträger 2 zusätzlich stabilisieren. Durch diese Ausbildung des Behälterzellenträgers 2 weist dieser eine besonders hohe Stabilität auf. Die Behälterzellen 3 sind in Öffnungen des Verbindungssegments 26 und durch nach innen gekrümmte Endbereiche 28 der Seitenwangen 24 positioniert, wobei die Endbereiche 28 zusätzlich eine Klemmwirkung auf die Behälterzellen 3 ausüben und diese somit in ihrer Lage fixieren. Hierdurch ist eine besonders hohe Stabilität der Vorrichtung 1 bereitgestellt.

Der Behälterzellenträger 2 ist mittels eines schichtweisen Materialauftragens in einem 3D-Drucker in einem Fertigungsschritt erzeugt. In herkömmlichen Fertigungsverfahren wäre die Herstellung des Behälterzellenträgers in dieser Form nicht oder nur durch eine Mehrzahl an aufwendigen Fertigungsschritten zu realisieren. So müsste der Behälterzellenträger 2 in mehrere Einzelkomponenten unterteilt werden, welche anschließend miteinander zu verbinden wären. Die dadurch entstehenden Verbindungsbereiche würden wiederum eine Nachbehandlung bedingen, um einer dort entstandene erhöhte Gefahr von Ablagerungen von Schmutz entgegenzuwirken. Im Spritzgussprozess wären beispielsweise komplizierte mehrteilige Werkzeugsysteme vonnöten, um die erforderliche Profilform des Längsprofils des Behälterzellenträgers 2 zu realisieren. In einer Ausführung des Behälterzellenträgers 2 aus einem Blech wären zumindest ein Stanzvorgang, sowie mehrere Biegeoperationen auszuführen. Anschließen müssten die Anbindungssegmenten 20 und den Mitnehmern 40 beispielsweise mittels Kleben oder Schweißen mit dem Längsprofil verbunden werden.

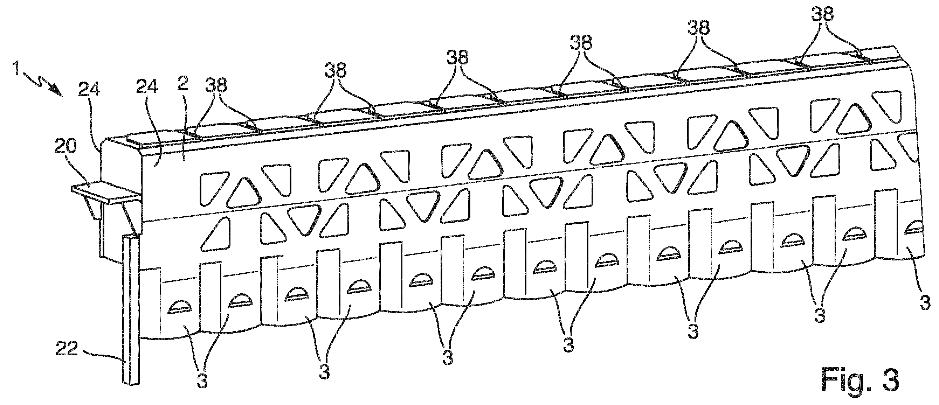

Aus Figur 3 ist schematisch eine perspektivische Seitenansicht einer mittels schichtweisen Materialauftragens erzeugten Vorrichtung 1 zum Tragen von zu reinigenden Behältern in einer Reinigungsmaschine zu entnehmen. Die Vorrichtung 1 wurde hierbei in einem Fertigungsschritt in einem 3D-Drucker erzeugt. Um Gewicht einzusparen, weisen die Behälterzellen 3 hierbei mit ihren angrenzenden Behälterzellen 3 gemeinsame Trennwände 38 auf. Ferner sind die Seitenwangen 24 direkt mit den Behälterzellen 3 verbunden, so dass auf ein Verbindungssegment verzichtet werden kann. Für eine weitere Gewichtsreduzierung sind die Seitenwangen 24 perforiert bereitgestellt. Auch die stirnseitig angeordneten, Mitnehmer 22 aufweisenden Anbindungssegmente 20 sind einstückig mit den Seitenwangen 24 verbunden. Hierdurch ist eine besonders stabile und gleichzeitig leichte Struktur der Vorrichtung 1 bereitgestellt. Aufgrund der im Vergleich zu herkömmlichen Vorrichtungen geringen Masse der Vorrichtung 1 kommt es somit auch lediglich zu einem geringen Wärmetransport durch die Vorrichtung 1 von einer Behandlungszone der Reinigungsmaschine in eine weitere.

Soweit anwendbar können alle einzelnen Merkmale, die in den einzelnen Ausführungsbeispielen dargestellt sind, miteinander kombiniert und/oder ausgetauscht werden, ohne den Bereich der Erfindung zu verlassen.

### Bezugszeichenliste

- 1: Vorrichtung
- 2: Behälterzellenträger
- 20: Anbindungssegment
- 22: Mitnehmer
- 24: Seitenwange
- 26: Verbindungssegment
- 28: Endbereich
- 3: Behälterzelle
- 30: Einführöffnung
- 32: Zentrierbereich
- 34: Positionierrippe
- 36: Spülöffnung
- 38: Trennwand
- L: Längsachse
- M: Mittelachse

## Patentansprüche

1. Verfahren zum Herstellen einer Vorrichtung zum Tragen von zu reinigenden Behältern in einer Reinigungsmaschine, bevorzugt in einer Reinigungsmaschine einer Getränkeabfüllanlage, umfassend mindestens eine Komponente zum Ausbilden der Vorrichtung,
**dadurch gekennzeichnet, dass**
die mindestens eine Komponente durch schichtweises Materialauftragen erzeugt wird.

2. Verfahren gemäß Anspruch 1, **dadurch gekennzeichnet, dass** das schichtweise Materialauftragen mittels eines 3D-Druckers erfolgt.

3. Verfahren gemäß Anspruch 1 oder 2, **dadurch gekennzeichnet, dass** als mindestens eine Komponente ein Behälterzellenträger und/oder mindestens eine Behälterzelle erzeugt wird.

4. Verfahren gemäß einem der vorstehenden Ansprüche, **dadurch gekennzeichnet, dass** zum schichtweisen Materialauftragen ein einziges Material verwendet wird.

5. Verfahren gemäß einem der Ansprüche 1 bis 3, **dadurch gekennzeichnet, dass** zum schichtweisen Materialauftragen mehrere Materialien, bevorzugt zwei Materialien, verwendet werden, wobei das schichtweise Materialauftragen bevorzugt an mindestens einem Halbzeug erfolgt.

6. Verfahren gemäß einem der vorstehenden Ansprüche, **dadurch gekennzeichnet, dass** die Vorrichtung durch das schichtweise Materialauftragen einstückig bereitgestellt wird.

7. Verfahren gemäß einem der vorstehenden Ansprüche, **dadurch gekennzeichnet, dass** das schichtweise Materialauftragen auf Grundlage digitaler Modelldaten der mindestens einen Komponente erfolgt.

8. Vorrichtung zum Tragen von zu reinigenden Behältern in einer Reinigungsmaschine, bevorzugt in einer Reinigungsmaschine einer Getränkeabfüllanlage, mit mindestens einer Komponente zum Ausbilden der Vorrichtung,
**dadurch gekennzeichnet, dass**
die mindestens eine Komponente durch schichtweises Materialauftragen erzeugt ist.

9. Vorrichtung gemäß Anspruch 8, **dadurch gekennzeichnet, dass** das schichtweise Materialauftragen mittels eines 3D-Druckers erzeugt ist.

10. Vorrichtung gemäß Anspruch 8 oder 9, **dadurch gekennzeichnet, dass** die Komponente ein Behälterzellenträger und/oder mindestens eine Behälterzelle ist.

11. Vorrichtung gemäß einem der Ansprüche 8 bis 10, **dadurch gekennzeichnet, dass** die mindestens eine Komponente ein einziges Material aufweist.

12. Vorrichtung gemäß einem der Ansprüche 8 bis 10, **dadurch gekennzeichnet, dass** die mindestens eine Komponente mehrere Materialien, bevorzugt zwei Materialien, aufweist, wobei der schichtweise Materialauftrag bevorzugt an einem Halbzeug erfolgt ist.
